(19) Europäisches Patentamt
European Patent Office
Office européen des brevets

(11) **EP 4 017 157 B1**

(12) **EUROPEAN PATENT SPECIFICATION**

(45) Date of publication and mention of the grant of the patent:
**24.04.2024 Bulletin 2024/17**

(51) International Patent Classification (IPC):
**H04W 68/02** *(2009.01)* **H04W 76/27** *(2018.01)*

(21) Application number: **21160698.3**

(52) Cooperative Patent Classification (CPC):
**H04W 68/02;** H04W 76/28

(22) Date of filing: **04.03.2021**

(54) **METHOD FOR EFFICIENT PAGING EXPANSION FOR MOBILE UES USING EXTENDED DRX AND PTW ZONES**

VERFAHREN ZUR EFFIZIENTEN PAGING-ERWEITERUNG FÜR MOBILE BENUTZERGERÄTE MIT ERWEITERTEN DRX- UND PTW-ZONEN

PROCÉDÉ D'EXTENSION DE PAGINATION EFFICACE POUR LES EU MOBILES UTILISANT DES ZONES DRX ET PTW ÉTENDUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2020 EP 20214518**

(43) Date of publication of application:
**22.06.2022 Bulletin 2022/25**

(73) Proprietor: **Shenzhen Goodix Technology Co., Ltd. Shenzhen, Guangdong 518045 (CN)**

(72) Inventor: **Kurth, Mathias 01277 Dresden (DE)**

(74) Representative: **Lippert Stachow Patentanwälte Rechtsanwälte Partnerschaft mbB Krenkelstraße 3 01309 Dresden (DE)**

(56) References cited:
**WO-A1-2018/063467 US-A1- 2018 352 604**

- **ERICSSON: "Wake Up Signal", 3GPP DRAFT; R2-1804962, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428656, Retrieved from the Internet: URL:http://www.3gpp.org/ftp/Meetings%5F3GP P%5FSYNC/RAN2/Docs/ [retrieved on 2018-04-14]**

**EP 4 017 157 B1**

**Description**

The invention relates to a method for efficient paging of mobile user equipment (UEs), using extended discontinuous reception (eDRX) and paging time window (PTW) zones.

According to recent market forecasts, the Internet-of-Things (IoT) segment is expected to grow considerably within the next few years. Many use cases like supply chain tracking require network coverage with seamless mobility support as provided by today's cellular networks. To cope with the massive number of IoT devices expected, the 3GPP standardization body has introduced Machine type communication (MTC) capabilities into the cellular network technology.

In the following, the invention is illustrated using the NarrowBand Internet-of-Things (NB-IoT) access technology as well as the Evolved Packet Core (EPC). The invention is not limited to the selected technology; it can be applied to 4G E-UTRAN, eMTC and other technologies using extended discontinuous reception (eDRX) as well.

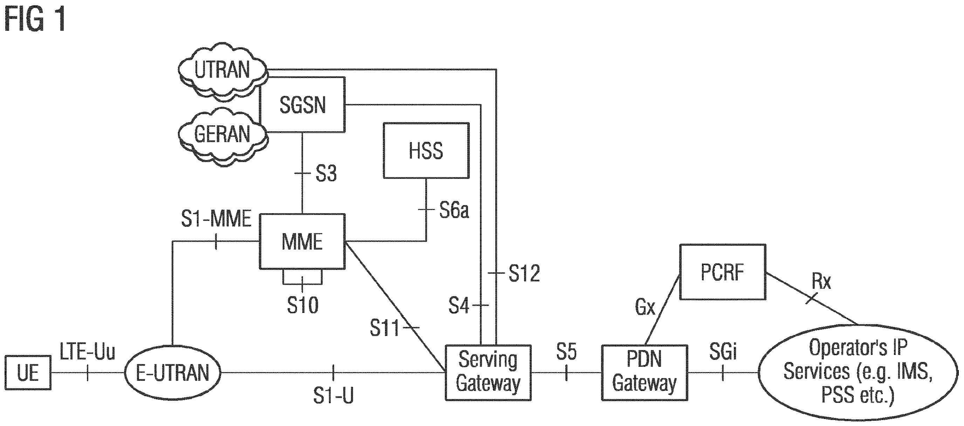

Figure 1 shows the network architecture reference model of the 4th generation (4G) 3GPP cellular network. The Access Stratum (AS) consists of Evolved Universal Terrestrial Radio Access Network (E-UTRAN) and the User Equipment (UE). The Evolved Node B (eNodeB) is the network element of the E-UTR_AN. Within the description of the invention the terms eNodeB, base station and radio access node are used synonymously. Narrowband-IoT is a subset of E-UTRAN.

The Evolved Packet Core (EPC) comprises following subcomponents: a Mobility Management Entity (MME), a Serving Gateway (SGW), a Packet Data Network Gateway (PGW), and a Home Subscriber Server (HSS).

The MME is the key control-node for the LTE access-network. The MME entity verifies subscriber authorization, manages the location of the User Equipment (UE) with the Tracking Area (TA), and stores the connection states and security parameters of the subscriber UE devices. When the tracking area is changed, the MME instance receives a tracking area update. So, it is involved in the bearer activation/deactivation process and is also responsible for choosing the Serving Gateway (SGW) for a UE at the initial attach and at time of intra-LTE handover involving Core Network (CN) node relocation. It is responsible for authenticating the user (by interacting with the Home Subscriber Server). The Non Access Stratum (NAS) signaling terminates at the MME and it is also responsible for generation and allocation of temporary identities to UEs. It checks the authorization of the UE to camp on the service provider's Public Land Mobile Network (PLMN) and enforces UE roaming restrictions. The MME is the termination point in the network for ciphering/integrity protection for NAS signaling and handles the security key management. The MME provides the control plane function for mobility between LTE and 2G/3G access networks with the S3 interface terminating at the MME from the SGSN. The MME also terminates the S6a interface towards the HSS for roaming UEs.

The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and Packet Data Network Gateway). For idle state User Equipment, the SGW terminates the downlink data path and triggers paging when downlink data arrives for the UE. It manages and stores UE contexts, e. g. parameters of the IP bearer service, network internal routing information.

The Packet Data Network Gateway (PDN Gateway, also PGW) provides connectivity from the UE to external packet data networks (PDNs) by being its point of exit and entry of traffic. A piece of UE may have simultaneous connectivity with more than one Packet Data Network Gateway for accessing multiple packet data networks. The PGW performs policy enforcement, packet filtering for each user, charging support, lawful interception and packet screening. Another key role of the PGW is to act as the anchor for mobility between 3GPP and non-3GPP technologies such as WiMAX and 3GPP2.

The HSS is a central database that contains user-related and subscription-related information. The functions of the HSS include functionalities such as mobility management, call and session establishment support, user authentication and access authorization. The HSS is based on pre-Rel-4 Home Location Register (HLR) and Authentication Center (AuC).

In figure 1, the transitions between the single architecture components indicate interfaces that acting upon specific protocols.

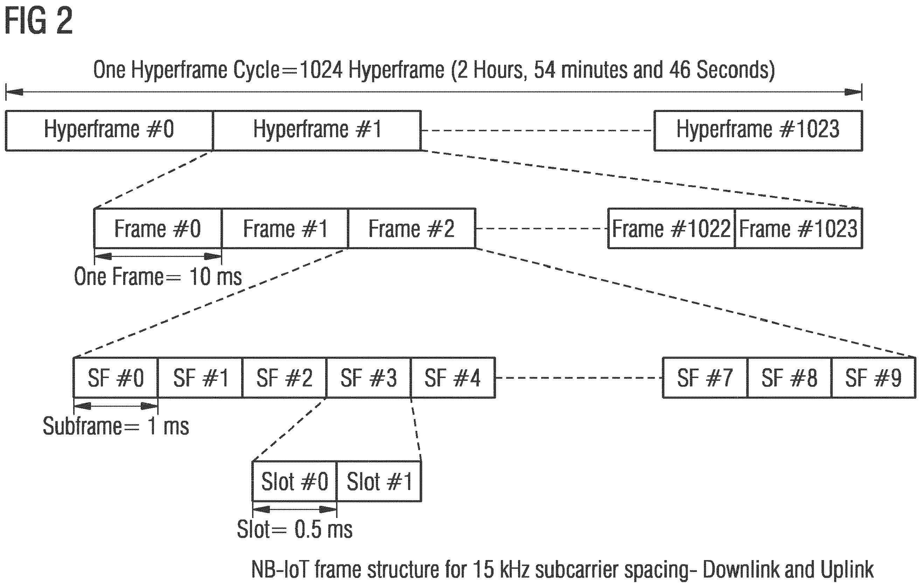

For synchronization purposes between an eNodeB and a UE, the time on the AS is partitioned into frames. The frame structure of NB-IoT is shown in figure 2. A sub-frame consists of two slots of 500ps each. A system frame of 10ms contains 10 sub-frames. A hyper system frame has 1024 system frames (10.24s). A hyper system frame cycle consists of 1024 hyper system frames covering about 3 hours.

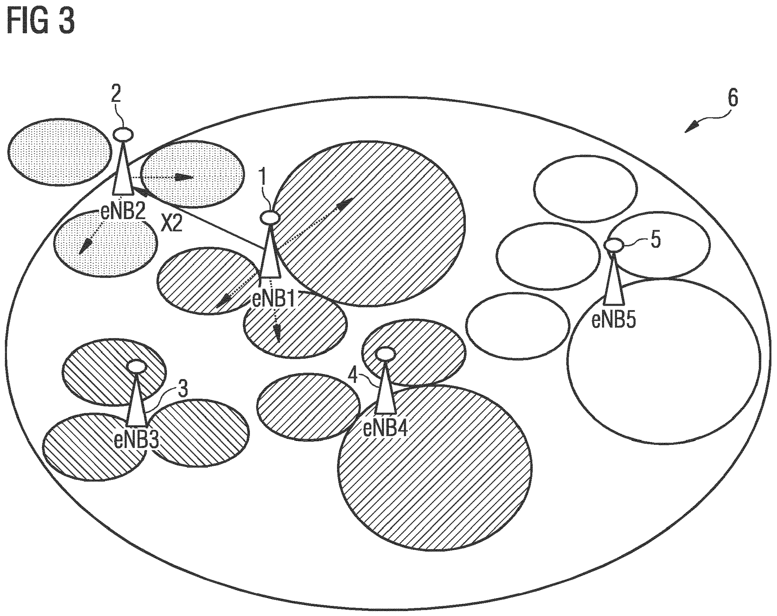

The cellular network supports mobile UEs in both active and idle state. When the UE is in idle state, the network tracks the location of the UE on a level of tracking area (TA). A tracking area 6 consists of a set of eNodeBs 1 to 5 connected to the same MME as shown in figure 3. The TA 6 in figure 3 includes a first radio access node 1, and four neighboring radio access nodes 2, 3, 4, 5 and wherein each radio access node is an eNodeB, eNB, in the LTE network. Each eNodeB, eNB1-eNB5, is responsible for radio-related functions in adjacent cells, wherein cells served by the same eNodeB are illustrated by identical filling patterns in the schematic view. In the schematic view, each eNodeB is visualized as a physical entity with a single antenna. However, an eNodeB is a logical node that may be implemented through one or more physical radio base stations.

During initial attach or on entering a new TA 6, the UE registers within the TA 6 (or within multiple TAs). The EPC knows the location of the UE at TA level. The UE can freely roam between eNodeBs 1 to 5 within the registered TA(s) 6 without the need to inform the EPC.

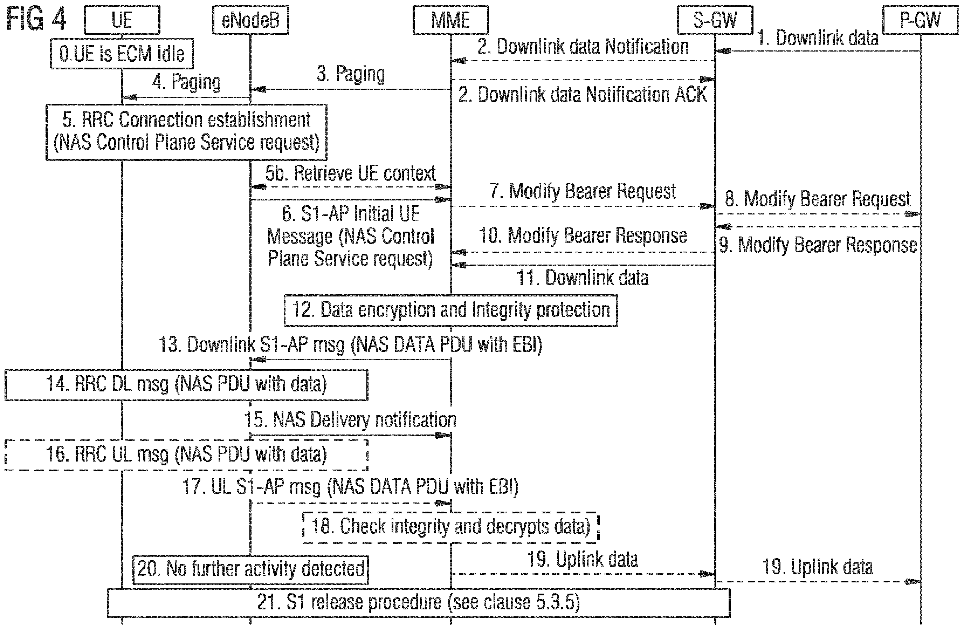

The procedure of locating the position of the UE at eNodeB-level is called paging. When data arrives at the EPC for the UE, paging is used to locate the UE and establish a signaling connection for downlink data delivery. The procedure for mobile terminated (MT) data transport in NB-IoT is shown in figure 4. The PGW delivers the data to SGW, where it remains until the UE has established a signaling connection. The SGW informs the MME about the downlink data, and the MME initiates the paging procedure, which is described in the following. The MME sends a paging request to eNodeB(s) according to a proprietary paging strategy. On the radio access network (RAN) level, the UE periodically listens for broadcast paging messages using a network-defined paging cycle. The eNodeB sends out a broadcast paging message within a predefined time slot determined by the paging occasion (PO) sub-frame, paging frame (PF), and paging hyper-frame (PH). A UE wakes up in a specific subframe either subframe 0, 4, 5 or 9 within a radio frame. These specific subframes within a paging frame when UE wakes up are called as Paging Occasions (POs). The RAN paging message is a broadcast: it is received by multiple UEs. The paging message contains the identities of the UEs that are paged. If the paging message was successfully received by the paged UE, it initiates a signaling connection to the MME. The SGW is informed and the downlink data is delivered to the UE via the MME encapsulated within Non Access Stratum (NAS) Data Protocol Data Units (PDUs). The paging has failed when no signaling connection was established. Depending on paging strategy and network configuration, the MME might start a further paging attempt, or it might declare the UE unreachable.

The paging strategy determines in which order the MME involves the eNodeBs of the TA(s) into the paging procedure. Well-known paging strategies are:

1. Blanket paging: The MME pages the UE at all eNodeBs of the registered TA(s). Blanket paging is a simple strategy with low paging latency but high paging resource consumption and high signaling load.

2. Sequential paging: The TA is partitioned into paging zones. The MME pages all eNodeBs within a paging zone in parallel. If the paging attempt fails, the MME escalates the paging to other paging zones. The paging zones are generally constructed according to the expected probability of presence of the paged UE.

3. Shortest-distance-first: Paging zones can be constructed according to the distance to the eNodeB where the last location update of the UE has happened.

The paging strategy determines the tradeoff between paging load and paging delay. Furthermore, the size of the TA is a critical network planning parameter determining the tradeoff between location update costs versus paging costs.

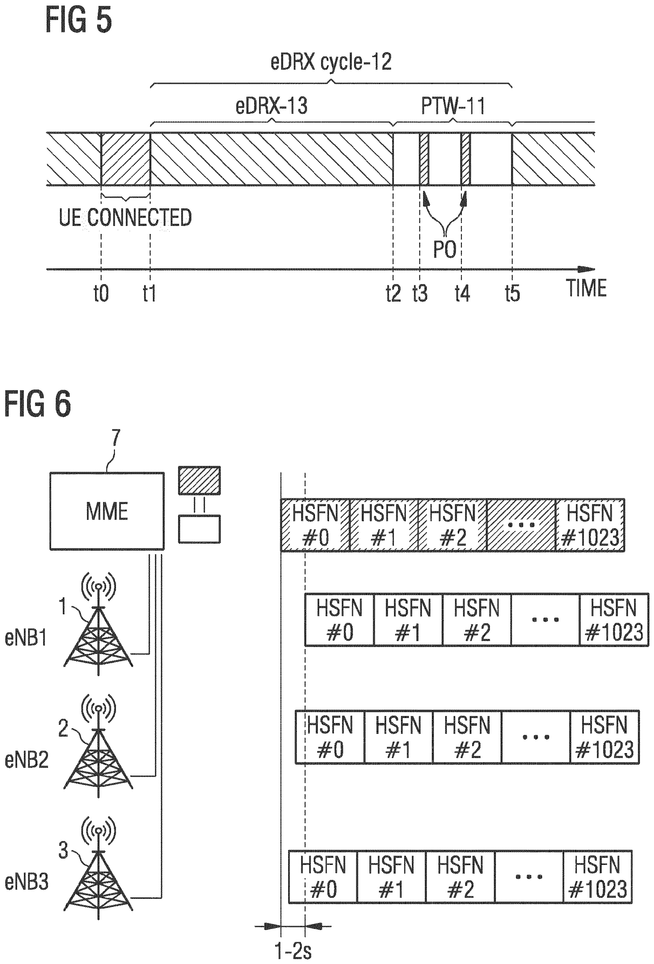

The setup of a voice call should not take more than some seconds to meet customer experiences. Thus, the voice-enabled UE must be reachable on a second basis. For IoT devices, on the other hand, energy consumption might be more important than reachability. 3GPP has introduced a high latency communication in combination with Power Saving Mode (PSM) and Extended Idle mode Discontinuous Reception (eDRX). An extended DRX cycle is shown in figure 5. As illustrated in figure 5, the UE is in a connected state during a period from time t0 to time t1. The MME may configure the eDRX to the UE within this period. During the period from time t1 to time t2, the UE is in the sleep state of the eDRX. The period from time t1 to time t5 corresponds to the eDRX cycle 12, which consists of the eDRX inactivity (sleep state)/idle mode 13, and the PTW 11. At time t2, the UE exits (wakes up) the sleep state of the eDRX cycle 12. The period from time t2 to time t5 corresponds to the paging transmission window (PTW) 11. Based on the paging message from the MME, the eNodeB repeatedly transmits the paging at the paging reception opportunity (PF and PO) within the paging transmission window. However, the UE does not have to grasp the paging transmission window. At time t3 and time t4, the paging reception opportunity (PF and PO) of the UE occurs. The paging reception opportunity is also called paging occasion. The eNodeB repeatedly transmits the paging to the UE at time t3 and time t4. At time t5, the UE transitions from the wake-up state of the eDRX to the sleep state.

Extended Idle mode DRX (eDRX) allows interrupting the idle mode DRX operation to save power. The interruption time is called eDRX inactivity. The remaining time within the eDRX cycle is called Paging Time Window (PTW). So, the eDRX inactivity period and the paging time window forms the eDRX cycle. Both network and UE negotiate the eDRX cycle and the PTW within the attach and tracking area update (TAU) procedure. The location of the PTW within the eDRX cycle in terms of paging hyper-frame (PH) and paging frame (PF) is pseudo-random and depends on the identity of the UE. For load balancing purposes, the PTWs of different UEs are uniformly distributed across the eDRX cycle. US 2018/0352604 A1 discloses techniques to support devices operating with eDRX as well as the use of PTW. WO 2018/063467 A1 refers also to a configuration of DRX parameters. And in Ericsson: "Wake Up Signal (WUS)", 3GPP DRAFT; R2-1804962 an additional wake up signal in combination with the eDRX technique is disclosed.

The Paging Time Window is determined as follows (see also [3GPP TS 36.304, v16.2.0, chap. 7.3]):

- The paging Hyper-(H) System frame number (SFN) is determined as: H-SFN mod $T_{eDRx,H}$ = (UE_ID_H mod $T_{eDRX,H}$), whereas $T_{eDRx,H}$ is the eDRX cycle in number of hyper-frames and UE_ID_H are the 12 most significant bits of a hashed ID (defined below);
- The paging frame system-frame-number (SFN) is determined as: SFN = $256*i_{eDRX}$, with $i_{eDRX}$ = floor (UE_ID_H $/T_{eDRX,H}$) mod 4;
- The hashed ID is determined by hashed ID = ~ (crc32(0xFFFF FFFF) ^ crc32(M-TMSI)), with '~' is the ones complement, '^' is exclusive OR, 'crc32' is the 32 bit cyclic redundancy check using the ITU generator polynomial and 'M-TMSI' is the MME Temporary Mobile Subscriber Identity (32 bit).

The floor expression means to round down. The 32bit cyclic redundancy check uses the generator polynomial 0x104C11DB7 as defined by the ITU-T V.42.

The UE is reachable for mobile terminated (MT) data and signaling during the PTW only. The implications on the MT Data transport use case (see figure 4) are as follows. The MME needs to be aware whether and when the target UE is reachable next. This is achieved by loose hyper-SFN synchronization between MME and eNodeB, described in the following. For MT data, the MME informs the SGW about the expected time it needs to buffer the data before the UE becomes reachable again. Furthermore, the MME needs to time-align the paging requests towards the eNodeB(s) according to the PTW of the UE.

3GPP supports the monitoring of the UE reachability. When the UE is not reachable due to eDRX inactivity, EPC internal as well as connected user applications can request to be informed when the UE becomes reachable again. The UE reachability can be used to migrate the buffering of MT data from the SGW to the application.

When using eDRX within a TA, the MME needs to know the PTW start and end of the UE to be paged. The PTW is determined by the frame timing of the AS, the eDRX configuration as well as NAS-level identities of the UE. For that purpose, 3GPP mandates a so-called loose Hyper-SFN Synchronization [3GPP TS 23.682, v16.8.0, chap. 4.5.13.3.2] between MME and eNodeB within a TA.

Loose Hyper-SFN Synchronization requires that the time difference between MME and each eNodeB within the TA is not more than 1-2s as shown in figure 6 (with reference to US 20180263012 A1). In other words, the eNodeBs 1, 2, 3 in the tracking area 6 have a coarse time-synchronization. The synchronization mechanism shown in figure 6 requires a performance improvement of the MME 7 and the eNodeB which also increases system complexity. The reason why synchronization having accuracy within 1-2 seconds within an MME and an eNodeB is performed is to minimize or obviate the time taken for the eNodeB to store a paging message.

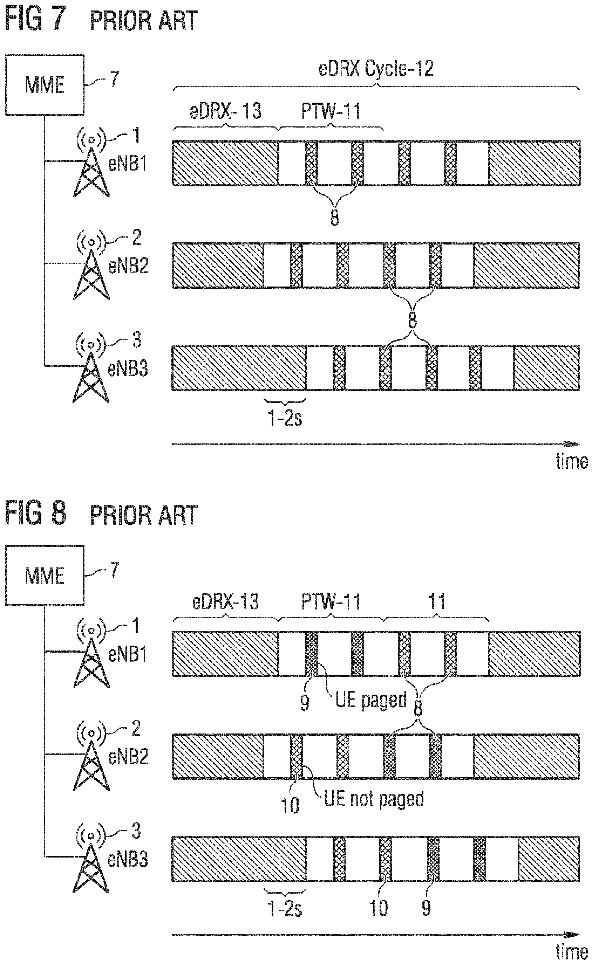

The impact of loose hyper-SFN synchronization on the paging strategy of the MME is as follows. As shown in figure 7, the PTWs 11 for the target UE are overlapping for all eNodeBs 1, 2, 3 within the TA. The allowed variation is 1-2s whereas the minimum paging cycle in NB-IoT is 1.28s. During the negotiation of the eDRX parameters with the UE, the MME 7 needs to dimension the PTW length according to paging strategy. If the PTW is short, the first paging attempts fail because of UE mobility, and the MME 7 has paged the wrong eNodeBs, the UE might enter eDRX inactivity again and might not be reachable for a long time. The MME 7 has then the following options:

1. The MME might prolong the PTW to accommodate additional paging attempts at the expense of the UE power consumption.

2. The MME might escalate paging earlier: By involving eNodeBs earlier, the paging load on the AS increases.

3. The MME continues the paging in the next eDRX cycle leading to higher paging latency as well as longer data buffering at the SGW.

The 3GPP specification favors option 1 [see also R2-161311, TS 23.682 Release 13 (and newer)] to address the issue. Figure 8 illustrates the resulting time line of the paging procedure. In the shown example, the MME 7 is using sequential paging with two paging zones 11 and two paging occasions 8 per paging zone 11. The MME 7 pages the UE at eNodeB 1 first, where the UE was registered last. The MME 7 allows for two paging occasions or attempts per paging zone. After two unsuccessful paging attempts at eNodeB 1, the MME 7 escalates the paging to the complete TA involving also eNodeB 2 and 3. As the MME 7 has selected two paging zones 11 with two attempts each, the whole PTW for the UE needs to cover 4 paging occasions (POs) 8.

So, the problem which should be addressed by the present invention is that with the state-of-the-art the sequential paging creates different drawbacks and as the paging strategy is proprietary, the motivated problem also creates an inherent tradeoff. By changing the paging strategy, the tradeoff can be shifted, e. g. in dimensions like UE power consumption vs. paging latency.

It is an objective of the present invention to specify a method that allows an efficient paging for mobile user equipment (UEs) which does not go of the power consumption of the UE.

The objective of the present invention is solved by a method for efficient paging of mobile user equipment (UEs) using extended discontinuous reception (eDRX) and paging transmission window (PTW) zones $Pz_{eNB}$, with $Pz_{eNB} = 0 ... N_{Pz}$ being identifiers of PTW zones within a tracking area (TA) and $N_{Pz} > 0$ being a number of the PTW zones within the tracking area, wherein the TA consists of a set of eNodeBs connected to a mobile management entity (MME), wherein the eNodeBs are partitioned into the PTW zones, wherein the PTW zone (14) $Pz_{eNB}$ for a eNodeB is determined by $Pz_{eNB} = 1 + ECI \bmod N_{Pz}$, with ECI being the E-UTRAN cell identifier, the method comprising the following steps:

- step 1: the MME determines an eNodeB of a target UE, where said UE was last registered and determines an associated paging transmission window start time for said UE, wherein PTW zone 0 is only assigned to the last registered eNodeB;
- step 2: the MME selects one PTW zone within the TA and pages the target UE in the selected PTW zone;
- step 3: the MME stops the paging if it was successful,
- otherwise the MME selects a next PTW zone and continues with step 2 until all PTW zones in the associated TA of the target UE have been proceeded,

wherein the different PTW zones are non-overlapping in time and except for PTW zone 0, all PTW zones are pseudo-randomly assigned to eNodeBs.

A PTW zone may include a variable number of eNodeBs. $Pz_{eNB}$ is an identifier of the PTW zones, whereas a PTW zone can be assigned to different eNodeBs. The variable $N_{pz}$ indicates the number of PTW zones within a tracking area. By convention the PTW zone 0 ($N_{pz} = 0$) always consists only of the eNodeB where the UE was registered last. The subsequent PTW zones 1, 2, 3 and so one ($Pz_{eNB} = 1$ or 2 or 3 ...; $N_{pz} = 1$ or 2 or 3, ... respectively) are pseudo-randomly assigned to eNodeBs. Different PTW zones are not overlapping in time.

The non-overlapping PTW zones reduce the dependency of the PTW length on the paging strategy. The MME does not need to provision for UE mobility when determining the PTW length. The shorter PTW length reduces the power consumption on the UE side. The tradeoff between paging load and paging latency can be controlled via the quantity of PTW zones without sacrificing UE power consumption. Both UE and network need to maintain the eNodeB where the UE registered last.

The number of PTW zones $N_{pz}$ per TA is a runtime configuration parameter that can be optimized within network planning.

According to the inventive method, the PTW zone $Pz_{eNB}$ for a eNodeB is determined by $Pz_{eNB} = 1 + ECI \bmod N_{pz}$, with ECI being the E-UTRAN cell identifier. An exception is needed for the paging zone 0 ($Pz_{eNB} = 0$) with last registered cell only.

The eNodeBs of a TA are partitioned into PTW zones in the following way. Let $N_{pz} > 0$ be the MME selected number of PTW zones for the considered TA. The PTW zone $Pz_{eNB} = 0...N_{pz}$ for the eNodeB shall be determined by $Pz_{eNB} = 1 + ECI \bmod N_{pz}$ with ECI being the E-UTRAN Cell Identifier. For the last registered eNodeB, the PTW zone $Pz_{eNB} = 0$ by convention. The ECI is used as an identification of the associated eNodeB.

According to a variant of the inventive method, the target UE and the MME determine a time location of the PTW start time as follows:

H-SFN $\bmod T_{eDRX,H} = ((UE\_ID\_H + T_{PTW,H}) \bmod T_{SDRX,H})$ and $T_{PTW,H} = floor (T_{PTW} * Pz_{eNB} / 1024)$ with $T_{PTW}$ being a PTW length in system frames, $T_{eDRX,H}$ is a eDRX cycle in hyper-frames and SFN $= 256 * i_{eDRX}$, with $i_{eDRX} = (floor (UE\_ID\_H / T_{eDRX,H}) + T_{PTW} * Pz_{eNB}) \bmod 4$, with UE\_ID\_H being the 12 most significant bits of a hashed ID, wherein the hashed ID is calculated by hashed ID = ~ (crc32(0xFFFF FFFF) ^ crc32(M-TMSI)).

The formulas above assign PTW zone 0 to the last registered eNodeB. The other PTW zones are allocated pseudo-randomly to the remaining eNodeBs in the TA based on ECI. Both UE and MME can determine the PTW zone of an eNodeB without significant additional efforts.

According to another variant of the inventive method, during a reselection of the UE from one eNodeB to another, the UE is reading a System-Information-Block1 that contains the ECI for determining the time location of the PTW start time.

The number of PTW zones is provided by the network in the respective location update messages. The information about connected eNodeBs and their identities is generally available on the MME side, so that also for the MME the proposed procedure has low overhead.

According to a further variant of the inventive method, the PTW zone feature is provided by the MME to the UE within the eDRX configuration using an attach accept message or a tracking area update accept message.

When the UE is updating its location with the network, it shall store the identification of the associated eNodeB. The MME shall provide the parameter $N_{pz}$ to the UE within the eDRX configuration using the ATTACH ACCEPT or TRACKING AREA UPDATE ACCEPT messages.

Pursuant to a further variant of the inventive method, the PTW feature is disabled by using $N_{pz} = 1$, whereas the UE and MME change to legacy eDRX handling.

By using $N_{pz} = 1$, the zoned PTW feature can be disabled so that the behavior changes to legacy eDRX handling discussed above.

Pursuant to another further variant of the inventive method, the method is applicable to all cellular technologies with extended idle mode DRX support, like E-UTRAN LTE, EMTC CAT-M, 5G technologies NR and 5G core.

The invention has been presented using NB-IoT and EPS technology as one example application. It can be applied to all cellular technologies with extended idle mode DRX support like E-UTRAN LTE and eMTC CAT-M as well as 5G technologies NR and 5G core.

The invention will be explained in more detail using exemplary embodiments.

The appended drawings show

Fig. 1    Non-roaming architecture for 3 GPP accesses (see [3GPP TS23.401, v16.8.0, Fig. 4.2.1-1]);

Fig. 2    NB-IoT frame structure (15kHz);

Fig. 3    Example for a tracking area architecture (out of US 9560628 B2);

Fig. 4    Mobile terminated data transport in non-access stratum Protocol Data Units (see [3GPP TS 23.401, v16.8.0, Fig. 4.2.1-1]);

Fig. 5    Extended DRX cycle (out of US 20180176883 A1);

Fig. 6    Loose Hyper-System-frame number Synchronization (out of US 20180263012 A1);

Fig. 7    Example of overlapping paging time windows in a tracking area (prior art);

Fig. 8    Example of paging a UE with overlapping paging time windows (prior art);

Fig. 9    Inventive Paging of a UE using three non-overlapping PTW zones;

Fig. 10    Inventive Paging of a UE using two non-overlapping PTW zones;

Fig. 11    Inventive Paging assignment with three non-overlapping PTW zones.

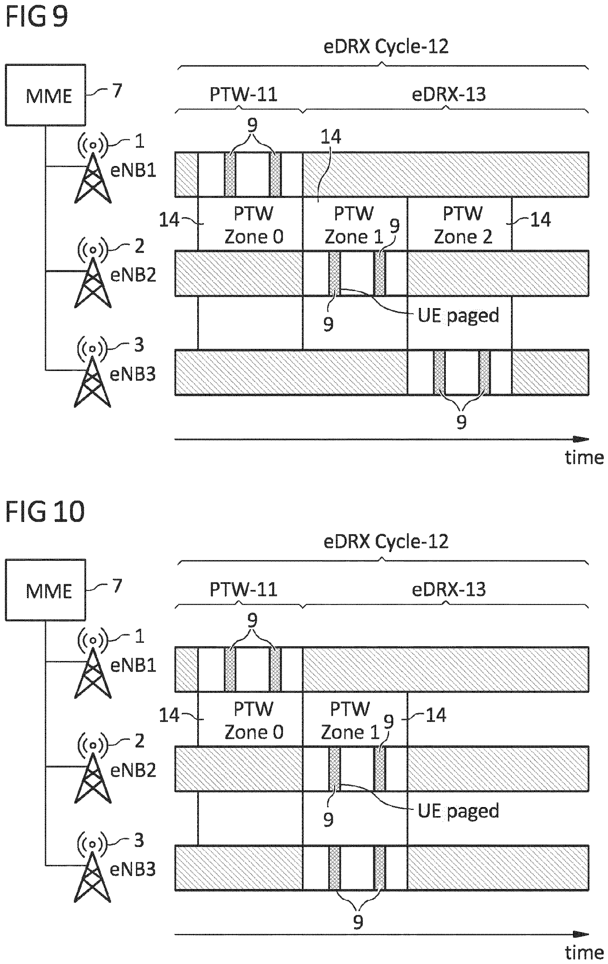

When applying the inventive efficient paging method for UEs using extended discontinuous reception (eDRX) and paging transmission window (PTW) zones, the above-mentioned use case presented in figure 8 changes as follows. The MME 7 in figure 9 has selected three PTW zones 11, 14 and two attempts, also called paging occasions, per PTW zone 14. In contrast to figure 8, the PTW 11 is shorter because the MME 7 does not need to provision for the escalation of the paging to additional zones within the PTW. In comparison, the paging load has not increased but the paging latency is slightly larger in the worst case that the UE did transition to eNodeB 3. By reducing the number of PTW zones 14 as shown in figure 10, the average paging latency can be reduced at the expense of average paging load. In figure 10 eNodeB 2 and 3 are assigned to PTW zone 1.

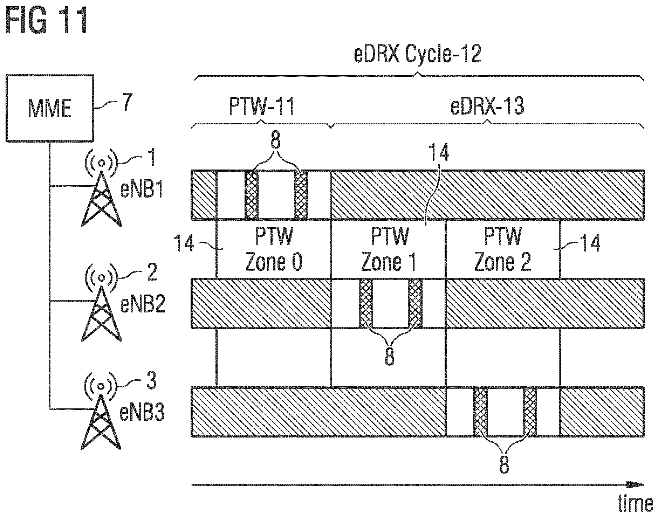

Regarding figure 11. The eNodeBs 1, 2, 3 of a TA are partitioned into PTW zones 14 in the following way. Let $N_{pz} > 0$ be the MME 7 selected number of PTW zones 14 for the considered TA. The PTW zone $Pz_{eNB} = 0 \ldots N_{pz}$ for the eNodeB is determined by $Pz_{eNB} = 1 + ECI \bmod N_{pz}$ with ECI being the E-UTRAN Cell Identifier. For the last registered eNodeB, the PTW zone $Pz_{eNB} = 0$ by convention.

When the UE is updating its location with the network, it stores the identification of the associated eNodeB. The MME 7 provides the parameter $N_{pz}$ to the UE within the eDRX configuration using the ATTACH ACCEPT or TRACKING AREA UPDATE ACCEPT messages.

Both UE and MME determines the time location of the PTW start time as follows:

$$\texttt{H-SFN mod } T_{eDRX,H} = ((UE\_ID\_H + T_{PTW,H}) \bmod T_{eDRX,H})$$

  o $T_{PTW}$ is the PTW length in system frames
  o $T_{PTW,H}$ is the PTW length in hyper system frames

○

$$T_{PTW,H} = floor(T_{PTW} * PzeNB / 1024)$$

$$SFN = 256* i_{eDRX}$$

○

$$i_{eDRX} = (floor(UE\_ID\_H/_{TeDRX,H}) + T_{PTW} * Pz_{eNB}) \bmod 4$$

The formulas above assign PTW zone 0 to the last registered eNodeB. The other PTW zones are allocated pseudo-randomly to the remaining eNodeBs in the TA based on ECI. Both UE and MME can determine the PTW zone of an eNodeB without significant additional efforts.

Figure 11 shows an example of the PTW zone assignment using three PTW zones 14 and PTW length of two paging occasions 8. During the reselection procedure from one eNodeB to another, the UE is already reading the System Information Block 1 that contains the ECI. The number of PTW zones 14 is provided by the network in the respective location update messages. The information about connected eNodeBs and their identities is generally available on the MME side, so that also for the MME the proposed procedure has low overhead. Generally, the MME might use the blanket paging strategy the following way: Firstly, the MME 7 determines the last registered eNodeB for the requested UE and the associated PTW start. By definition, the last registered eNodeB is always in PTW zone 0. Then the MME 7 selects a PTW zone 14 and pages the UE at this PTW zone 14. The MME 7 stops the paging on success. On paging failure, the MME selects the next PTW zone 14 and continues by selecting another PTW zone 14 in the TA and pages the target UE in the selected PTW zone 14 until all PTW zones 14 have been processed.

Both the number of PTW zones $N_{pz}$ as well as the ECI assignment are subject to network planning. The parameter $N_{pz}$ changes the operating point of the tradeoff paging load vs. paging latency as discussed above. Furthermore, the network planner might assign ECIs to group eNodeBs within the same PTW zone. For example, a single cell tower often hosts three cells that are broadcasting within 120 degree horizontal separation. To have the three cells within the same PTW zone, the network planner needs to find three distinct ECIs satisfying $Pz_{eNB} = 1 + ECI \bmod N_{pz}$ with $Pz_{eNB}$ and $N_{pz}$ fixed.

### List of Reference Signs

1     First eNodeB, first radio access node
2     A second eNodeB
3     A third eNodeB
4     A fourth eNodeB
5     A fifth eNodeB
6     Tracking area
7     Mobility Management Entity
8     Paging occasion
9     UE is paged
10    UE is not paged
11    Paging time window
12    Extended discontinuous reception cycle
13    eDRX in idle mode
14    Paging time window zone

### Claims

1. A method for efficient paging of mobile user equipment, UEs, using extended discontinuous reception, eDRX, and paging transmission window, PTW, zones (14) $Pz_{eNB}$, with $Pz_{eNB} = 0 \ldots N_{pz}$ being identifiers of PTW zones within a tracking area (6), TA, and $N_{Pz} > 0$ being a number of PTW zones (14) within the tracking area, wherein the TA (6) consists of a set of eNodeBs (1,2,3) connected to a mobile management entity (7), MME, wherein the eNodeBs are partitioned into the PTW zones, wherein the PTW zone (14) $Pz_{eNB}$ for a eNodeB is determined by $Pz_{eNB} = 1 + ECI \bmod N_{Pz}$, with ECI being the E-UTRAN cell identifier, the method comprising the following steps:

- step 1: the mobile management entity (7), MME, determines an eNodeB of a target UE, where said UE was last registered and determines an associated paging transmission window start time for said UE, wherein PTW zone 0 is only assigned to the last registered eNodeB;
- step 2: the MME (7) selects one PTW zone (14) in the TA (6) and pages the target UE in the selected PTW zone (14) ;
- step 3: the MME (7) stops the paging if it was successful,
- otherwise the MME (7) selects a next PTW zone (14) and continues with step 2 until all PTW zones (14) in the associated TA (6) of the target UE have been proceeded, wherein the different PTW zones (14) are non-overlapping in time and except for PTW zone 0, all PTW zones (14) are pseudo-randomly assigned to eNodeBs.

2. The method according to claim 1, wherein the target UE and the MME (7) determine a time location of the PTW start time as follows:
H-SFN mod $T_{eDRX,H}$ = ((UE_ID_H + $T_{PTW,H}$) mod $T_{eDRX,H}$) and $T_{PTW,H}$ = floor ($T_{PTW}$ * $Pz_{eNB}$ / 1024) with $T_{PTW}$ being a PTW length in system frames, $T_{eDRX,H}$ is a eDRX cycle in hyper-frames and SFN = 256 * $i_{eDRX}$, with $i_{eDRX}$ = (floor (UE_ID_H / $T_{eDRX,H}$) + $T_{PTW}$ * $Pz_{eNB}$) mod 4, with UE_ID_H being the 12 most significant bits of a hashed ID, wherein the hashed ID is calculated by hashed ID = ~ (crc32 (0xFFFF FFFF) ^ crc32 (M-TMSI)).

3. The method according to claim 2, wherein during a reselection of the UE from one eNodeB to another, the UE is reading a System-Information-Block1 that contains the ECI for determining the time location of the PTW start time.

4. The method according to one of the claims 1 to 3, wherein the PTW zone feature is provided by the MME (7) to the UE within the eDRX configuration using an attach accept message or a tracking area update accept message.

5. The method according to claim 4, wherein the PTW feature is disabled by using $N_{pz} = 1$, whereas the UE and MME (7) change to legacy eDRX handling.

6. The method according to one of the claims 1 to 5, wherein the method is applicable to all cellular technologies with extended idle mode DRX support, like E-UTRAN LTE, EMTC CAT-M, 5G technologies NR and 5G core.

**Patentansprüche**

1. Verfahren zum effizienten Paging von mobilen Benutzergeräten, UEs, unter Verwendung von erweitertem diskontinuierlichem Empfang, eDRX, und Paging-Übertragungsfenster- bzw. PTW-Zonen (14) $Pz_{eNB}$, wobei es sich bei $Pz_{eNB} = 0 ... N_{pz}$ um Kennungen von PTW-Zonen in einem Verfolgungsbereich (6), TA, handelt und es sich bei $N_{Pz} > 0$ um eine Anzahl von PTW-Zonen (14) in dem Verfolgungsbereich handelt, wobei der TA (6) aus einer Menge von eNodeBs (1,2,3), die mit einer mobilen Verwaltungsentität (7), MME, verbunden sind, besteht, wobei die eNodeBs in die PTW-Zonen unterteilt sind, wobei die PTW-Zone (14) $Pz_{eNB}$ für eine eNodeB durch $Pz_{eNB} = 1 + ECI \bmod N_{Pz}$ bestimmt wird, wobei ECI die E-UTRAN-Zellenkennung ist, wobei das Verfahren die folgenden Schritte umfasst:

- Schritt 1: die mobile Verwaltungsentität (7), MME, bestimmt eine eNodeB eines Ziel-UE, wobei das UE zuletzt registriert wurde, und bestimmt die Startzeit eines assoziierten Paging-Übertragungsfensters für das UE, wobei PTW-Zone 0 nur der zuletzt registrierten eNodeB zugewiesen ist;
- Schritt 2: die MME (7) wählt die PTW-Zone (14) in dem TA (6) aus und pagt das Ziel-UE in der ausgewählten PTW-Zone (14);
- Schritt 3: die MME (7) beendet das Paging, wenn es erfolgreich war,
- andernfalls wählt die MME (7) eine nächste PTW-Zone (14) aus und fährt mit Schritt 2 fort, bis alle PTW-Zonen (14) in dem assoziierten TA (6) des Ziel-UE verarbeitet wurden,

wobei sich die unterschiedlichen PTW-Zonen (14) zeitlich nicht überschneiden und außer PTW-Zone 0 alle PTW-Zonen (14) pseudozufällig zu eNodeBs zugewiesen sind.

2. Verfahren nach Anspruch 1, wobei die Ziel-UE und die MME (7) eine Zeitposition der PTW-Startzeit wie folgt bestimmen:

H-SFN mod $T_{eDRX,H}$ = ((UE_ID_H + $T_{PTW,H}$) mod $T_{eDRX,H}$) und $T_{PTW,H}$ = floor($T_{PTW}$ * $Pz_{eNB}$ / 1024), wobei $T_{PTW}$ eine PTW-Länge in Systemframes ist, $T_{eDRX,H}$ ein eDRX-Zyklus in Hyperframes ist und SFN = 256 * $i_{eDRX}$, wobei $i_{eDRX}$ = (floor (UE_ID_H / $T_{eDRX,H}$) + $T_{PTW}$ * $Pz_{eNB}$) mod 4, wobei es sich bei UE_ID_H um die 12 höchstwertigen Bit einer gehashten ID handelt, wobei die gehashte ID durch gehashte ID = ~ (crc32(0xFFFF FFFF) ^ crc32(M-TMSI)) berechnet wird.

3. Verfahren nach Anspruch 2, wobei das UE während einer Neuanwahl des UE von einer eNodeB zu einer anderen einen System-Information-Block1 liest, der die ECI zum Bestimmen der Zeitposition der PTW-Startzeit enthält.

4. Verfahren nach einem der Ansprüche 1 bis 3, wobei das PTW-Zonenmerkmal dem UE durch die MME (7) innerhalb der eDRX-Konfiguration unter Verwendung einer Anbindungsannahmenachricht oder einer Verfolgungsbereichsaktualisierungsannahmenachricht bereitgestellt wird.

5. Verfahren nach Anspruch 4, wobei das PTW-Merkmal mittels $N_{pz}$ = 1 gesperrt wird, wohingegen das UE und die MME (7) zu einer Legacy-eDRX-Handhabung wechseln.

6. Verfahren nach einem der Ansprüche 1 bis 5, wobei das Verfahren auf alle Mobilfunktechnologien mit Extended-Idle-Mode-DRX-Unterstützung wie E-UTRAN LTE, EMTC CAT-M, die 5G-Technologien NR und 5G Core anwendbar ist.

**Revendications**

1. Procédé pour des opérations efficaces de radiomessagerie ou de télé-appel d'équipements utilisateurs mobiles, UE, utilisant une réception discontinue étendue, eDRX, et des zones de fenêtre(s) d'émission de radiomessagerie ou de télé-appel, PTW, (14) $Pz_{eNB}$, $Pz_{eNB}$ = 0 ... $N_{pz}$ étant les identifiants de zones PTW à l'intérieur d'une zone de suivi (6), TA, et $N_{pz}$ > 0 étant un nombre de zones PTW (14) à l'intérieur de la zone de suivi, dans lequel la TA (6) est constituée par un ensemble de eNodeB (1, 2, 3) connectés à une entité de gestion mobile (7), MME, dans lequel les eNodeB sont partitionnés à l'intérieur des zones PTW, dans lequel la zone PTW (14) $Pz_{eNB}$ pour un eNodeB est déterminée par $Pz_{eNB}$ = 1 + ECI mod $N_{pz}$, ECI étant l'identifiant de cellule(s) E-UTRAN, le procédé comprenant les étapes suivantes :

- étape 1 : l'entité de gestion mobile (7), MME, détermine un eNodeB d'un UE cible, où ledit UE a été enregistré en dernier et détermine un temps de début de fenêtre d'émission de radiomessagerie ou de télé-appel associé pour ledit UE, dans lequel la zone PTW 0 est seulement attribuée au eNodeB enregistré en dernier ;
- étape 2 : la MME (7) sélectionne une zone PTW (14) dans la TA (6) et réalise une opération de radiomessagerie ou de télé-appel sur l'UE cible dans la zone PTW sélectionnée (14) ;
- étape 3 : la MME (7) arrête l'opération de radiomessagerie ou de télé-appel si elle a réussi,
- sinon, la MME (7) sélectionne une zone PTW suivante (14) et poursuit l'étape 2 jusqu'à ce que toutes les zones PTW (14) dans la TA associée (6) de l'UE cible aient été traitées,

dans lequel les différentes zones PTW (14) sont en non-chevauchement temporel et à l'exception de la zone PTW 0, toutes les zones PTW (14) sont attribuées de façon pseudo-aléatoire aux eNodeB.

2. Procédé selon la revendication 1, dans lequel l'UE cible et la MME (7) déterminent une localisation temporelle du temps de début de PTW comme suit :

H-SFN mod $T_{eDRX,H}$ = ((UE_ID_H + $T_{PTW,H}$) mod $T_{eDRX,H}$) et $T_{PTW,H}$ = floor ($T_{PTW}$ * $Pz_{eNB}$/1024), $T_{PTW}$ étant une longueur de PTW en trames systèmes, $T_{eDRX,H}$ est un cycle eDRX en hyper-trames et SFN = 256 * $i_{eDRX}$, $i_{eDRX}$ = (floor (UE_ID_H/ $T_{eDRX,H}$) + $T_{PTW}$ * $Pz_{eNB}$) mod 4, UE_ID_H étant les 12 bits les plus significatifs d'un ID haché, dans lequel l'ID haché est calculé selon

```
ID haché = ~ (crc32(0xFFFF FFFF)^crc32(M-TMSI)).
```

3. Procédé selon la revendication 2, dans lequel, pendant une sélection à nouveau de l'UE d'un eNodeB à un autre, l'UE lit un bloc d'informations système System-Information-Block1 qui contient l'ECI pour déterminer la localisation temporelle du temps de début de PTW.

4. Procédé selon l'une quelconque des revendications 1 à 3, dans lequel la caractéristique de zone PTW est fournie par la MME (7) à l'UE à l'intérieur de la configuration eDRX en utilisant un message d'acceptation de lien ou un message d'acceptation de mise à jour de zone de suivi.

5. Procédé selon la revendication 4, dans lequel la caractéristique de PTW est invalidée en utilisant $N_{pz} = 1$, tandis que l'UE et la MME (7) passent en gestion eDRX patrimoniale.

6. Procédé selon l'une quelconque des revendications 1 à 5, le procédé pouvant être appliqué à toutes les technologies cellulaires avec support DRX en mode veille étendu, telles que E-UTRAN LTE, EMTC CAT-M, les technologies 5G NR et 5G de base.

# FIG 1

EP 4 017 157 B1

FIG 2

NB-IoT frame structure for 15 kHz subcarrier spacing- Downlink and Uplink

# FIG 3

EP 4 017 157 B1

FIG 4

EP 4 017 157 B1

# FIG 5

# FIG 6

FIG 7 PRIOR ART

FIG 8 PRIOR ART

## FIG 9

## FIG 10

# FIG 11

MME — 7

((○)) — 1
eNB1

((○)) — 2
eNB2

((○)) — 3
eNB3

eDRX Cycle-12

PTW-11      eDRX-13

8

14

14 —

PTW
Zone 0      PTW
Zone 1      PTW
Zone 2    —14

8

8

time

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180352604 A1
- WO 2018063467 A1
- US 20180263012 A1

- US 9560628 B2
- US 20180176883 A1

### Non-patent literature cited in the description

- **ERICSSON.** Wake Up Signal (WUS). *3GPP DRAFT; R2-1804962*

- 3GPP TS 36.304
- 3GPP TS 23.682